# EUROPÄISCHE PATENTANMELDUNG

(11) **EP 4 821 362 A1**
(43) Veröffentlichungstag der Anmeldung: **14.10.2026**
(21) Anmeldenummer: 24000145.3
(22) Anmeldetag: 02.12.2024
(51) Int. Cl.: A21D 13/32

(54) **LEBENSMITTEL FÜR BROTRÖSTER**

(30) Priorität: 04.10.2024 DE 202024001894 U
(71) Anmelder: Aydin, Matthias, 33378 Rheda-Wiedenbrück (DE)
(72) Erfinder: Aydin, Matthias, 33378 Rheda-Wiedenbrück (DE)

(57) **Zusammenfassung**

Die vorliegende Erfindung bezieht sich allgemein auf das Gebiet der Lebensmittel. Lebensmittel in Form von gebackenen Broten, vorzugsweise von Toastbroten, welche überwiegend aus Weizenmehl und Zusatzmitteln oder einer Mischung aus verschiedenen Mehlsorten hergestellt und zum anschließenden Rösten in einem herkömmlichen Brotröster geeignet sind. Erfindungsgemäß sind die ungerösteten Toastscheiben der Toastbrote mit einem Hohlraum versehen, die eine Lebensmittelfüllung aufnehmen und trotzdem in herkömmlichen Brotröstern getoastet werden können.

## Beschreibung

### Technisches Gebiet

Die vorliegende Erfindung betrifft ein Lebensmittel in Form eines gebackenen Brotes mit vorgeschnittenen Scheiben, welches überwiegend aus Weizenmehl und Zusatzmitteln oder einer Mischung aus verschiedenen Mehlsorten hergestellt und zum anschließenden Rösten in einem herkömmlichen Brotröster geeignet ist.

### Hintergrund der Erfindung

Brote sind ein populäres und nahrhaftes Lebensmittelprodukt. Ihr ansprechender Geschmack und ihre ansprechende Textur haben bewirkt, dass sie auf zahlreiche Art und Weise mit unterschiedlichsten Belägen zubereitet und verzehrt werden, insbesondere als ein Lebensmittel zum Frühstück und zum Abendbrot. Herkömmlicherweise werden Brote mit Belag als separate Mahlzeit zubereitet oder als Teil eines Gerichtes serviert.

Da die Zeit der Konsumierung von Lebensmittelprodukten für die Konsumenten immer wertvoller wird, steigt die Nachfrage nach nahrhaften, schnell und leicht zuzubereitenden Lebensmitteln, die auch für eine Zwischenmahlzeit geeignet sind. Diesem Trend, halb oder fertig zubereitete Lebensmittelprodukte auf Basis von Brot bereitzustellen, kommen einige Hersteller nach.

### Stand der Technik

Aus dem Stand der Technik sind viele Brotsorten, wie z.B. normale Brote und Spezialbrote bekannt. Zu den normalen Broten gehören beispielsweise die Weizenbrote mit mind. 90% Weizen, dann gibt es die Weizenmischbrote mit zwischen 51% bis 89% Weizen und die Roggenmischbrote mit zwischen 51% bis 89% Roggen, während Roggenbrote mind. 90% Roggen aufweisen. Zu den Spezialbroten gehören u.a. Diätbrote, Vollkornbrote, Dinkel-, Gerste-, Soja-, Hafer-, Hirsebrote und mit besonderen Zutaten auch die Kartoffel-, Leinsamen-, Rosinen-, Zwiebelbrote. Diese Brote können dann mit besonderen Backverfahren, wie beim Holzofenbrot, Steinofenbrot, Knäckebrot und Pumpernickel, hergestellt werden. Die Brotsorten werden nach verwendeter Backmischung und Art der Herstellung benannt.

Näher betrachtet werden soll das Kastenweißbrot. Das Kastenweißbrot wird, wie es der Name schon sagt, im Kasten gebacken. Es ist ein klassisches Industrieprodukt, das sich auf einer Linie rationell herstellen lässt. Ein mögliches Herstellverfahren ist die 4-Piece-Methode oder die 6-Piece-Methode. Die so hergestellten Kastenweißbrote bestehen, aufgrund ihrer benötigten Klebeeigenschaften, überwiegend aus Weizenbrotteig und werden mit zusätzlich Fett sowie etwas Zucker und Milch und anderen Zutaten hergestellt. Diese Brote sind kastenförmig und weisen eine relativ glatte Oberfläche auf. Das Kastenweißbrot hat eine dünne schwach gebräunte Kruste und eine sehr fein geporte Krume. Solche Brote werden im deutschsprachigen Raum als Toastbrote bezeichnet. Im englischsprachigen Raum hingegen wird das Kastenbrot erst ausschließlich nach dem Rösten als Toast bezeichnet und vor dem Rösten "Bread" genannt. Verkauft wird das Toastbrot meist vorgeschnitten, wobei die Größe der Brotscheiben bei allen Herstellern etwa gleich ist, damit Toastgeräte mit ähnlich großen Röstschlitzen produziert und verwendet werden können. Die klassische Größe deutscher Toastbrotscheiben sind ca. 9,0 cm x 9,5 cm x 1,3 cm. Es sind auch größere Toastbrotscheiben unter der Bezeichnung "American" oder "Sandwich toast" im Markt bekannt, die eine Größe von etwa 11,0 cm x 11,0 cm x 1,2 cm aufweisen. Beide gängigen Größen von Toastbrotscheiben sind in handelsüblichen Brotröstern bzw. Toastbrotgeräten einsetzbar. In einer handelsüblichen Toastbrot-Packung befinden sich in der Regel 20 Scheiben. Die gewünschte eckige Form der Toastscheiben entsteht durch den Einsatz der kastigen Backformen, die mit oder ohne Deckel ausgestattet sein können.

Toastgeräte zum Rösten vorgenannter Brotscheiben, vorzugsweise von Kastenweißbrot, sind aus dem Stand der Technik bekannt. Früher wurden die Toastgeräte noch Brotröster genannt, weil das Rösten von Brot eine lange Tradition hat. Mit Beginn der Elektrifizierung ging die Entwicklung von Toastgeräten rasant voran. Anfangs gab es erste Klapptoaster, die zwei seitliche Klapptüren aufwiesen, um jeweils eine Scheibe Brot aufzunehmen. Des Weiteren sind Einhängetoaster bekannt, bei denen die Brotscheibe mit einem Brotkorb in den Toaster eingelegt wurde. Auch Flachbetttoaster wurden entwickelt, wobei die Toastscheiben wie bei einem Grill waagerecht auf einem Rost liegend, geröstet wurden. Inzwischen gibt es vollautomatische Toastgeräte mit Heizelementen, die einen elektronischen oder rein thermisch-mechanischen Steuermechanismus für den gewünschten Bräunungsgrad einer Brotscheibe beinhalten. Bei solchen Toastgeräten, den sogenannten "Pop-Up-Toastern", werden die gerösteten Brotscheiben nach Erreichen des vorgewählten Bräunungsgrades kräftig nach oben ausgestoßen. Solche Toastgeräte stehen mobil und frei im Raum und können somit überall zum Einsatz kommen. Das Gerät hat eine vertikale Aufnahme für den Rohtoast und seitlich eine Schiebevorrichtung zum Absenken einer oder mehrerer Brotscheiben zwischen die Heizelemente. Das Toastgerät röstet nach Betätigung der Schiebevorrichtung die Brotscheibe. Beispielhaft sei ein vertikaler Einschlitz-Brotröster aus der DE 195 35 229 B4 hier aufgezeigt. Der Brotröster zeichnet sich dadurch aus, dass die Heizelemente in der Röstkammer aufeinander zu oder voneinander weg bewegt werden können. Als nachteilig hat sich herausgestellt, dass in diesen und anderen vertikalen Brotröstern keine belegten Toastbrote geröstet werden können, weil der Belag in den Brotröster fallen würde.

Eine Weiterentwicklung eines solchen Toastgerätes ist der DE 10 2006 034 338 A1 zu entnehmen. Hier werden die Toastbrotscheiben mittels Förderdrähten, die über zwei horizontal liegenden Walzen angetrieben werden, geführt und automatisch nach dem Durchlauf des Hitzebereiches ausgeworfen. Der horizontale Transport hat zwar den Vorteil, dass die Beläge auf den Toastbrotscheiben nicht so leicht herunterfallen können, aber die Beläge würden in dem Toastgerät verbrennen oder könnten aufgrund ihrer Größe nicht eingelegt werden. Das Toastgerät ist dafür ausgelegt, die Ober-und Unterseite einer Brotscheibe rösten zu können, aber nicht die darauf aufgelegten Beläge. Nachteilig ist, dass mit allen vorgenannten Geräten keine Brotscheiben mit einseitigem Belag geröstet werden können.

Auch das Gerät zur Zubereitung von Lebensmitteln, insbesondere zum Erhitzen und/oder Garen, wie in der DE 20 2015 101 110 U1 aufgezeigt, ist nicht zum Rösten von Brotscheiben bzw. Brotscheiben mit Belag geeignet

Ob geröstet oder weich als Rohtoast, wobei ein Rohtoast ein ungeröstetes Toastbrot darstellt, ist Toastbrot eine der beliebtesten Brotsorten weltweit. Es zeichnet sich durch seine charakteristische Form, Textur und Geschmack aus und hat einen Platz in vielen Haushalten gefunden und gehört auf jeden Frühstückstisch. Auch bei den Toastbroten gibt es verschiedene Sorten, z.B. Weißes Toastbrot, Vollkorn-Toastbrot, Mehrkorn-Toastbrot, Glutenfreies-Toastbrot, Proteinreiches Toastbrot, um nur einige zu nennen. Die verschiedenen Sorten bieten eine Vielfalt an Geschmack und ernährungsphysiologischen Eigenschaften. Kombiniert mit frischen Zutaten und gesunden Belägen auf einer Seite des Toastbrotes, ob weich als Rohtoast (also ungetoastet) oder geröstet, wird dieses zu einer köstlichen und praktischen Mahlzeit. Wenn nachstehend die Bezeichnung Toastbrot benutzt wird, sind damit ohne Einschränkung alle bekannten Toastbrote gemeint.

Eine belegte Brotscheibe bzw. Toastbrotscheibe und seine Herstellung sind in der DE 698 23 160 T2 offenbart. Hier besteht der Toast aus einer tiefgefrorenen oder gekühlten Brotscheibe, die mit einem Schinken-Käse-Belag versehen ist. Der Nachteil solcher belegten Toastbrote besteht darin, dass diese nicht mit den herkömmlichen, bekannten Toastgeräten regeneriert werden können, sondern hierzu einen Mikrowellenofen zur Erwärmung benötigen.

Ein weiterer Nachteil solcher Toastbrote, ob weich (ungeröstet) oder geröstet, besteht darin, dass beim Verzehr eines solchen Lebensmittels die Beläge herunterfallen und Verschmutzungen hervorrufen können, vor allem wenn Soßen wie Mayonnaise, Ketchup u.ä. Verwendung finden.

Zur Vermeidung einiger der vorgenannten Nachteile wird auf die international verbreitete Zwischenmahlzeit hingewiesen. Eine solche Mahlzeit besteht aus zwei oder mehr solcher vorgenannten dünnen Brotscheiben, die, übereinander gelegt, eine Zwischenmahlzeit ergeben. Diese bekannte Anordnung ist unter der Bezeichnung "Sandwich" bekannt. Zwischen den dünnen Brotscheiben kann sich ein beliebiger würziger Belag wie kalter Braten, Schinken, Thunfisch, Käse, Eier-, Salat-, Gurken- oder Tomatenscheiben usw. oder eine Kombination davon befinden. Für die Zubereitung eines klassischen Sandwiches werden zunächst dünne, große Brotscheiben vom Kastenweißbrot benutzt und mit Belag versehen. Meistens werden ungeröstete Toastbrotscheiben ohne Rinde verwendet. Die ungerösteten belegten Toastbrotscheiben können diagonal zu Dreiecken geschnitten sein. Der Nachteil von belegten ungerösteten Sandwiches besteht darin, dass diese aufgrund ihrer Abmessungen nicht in herkömmlichen Toastgeräten geröstet werden können. Für die Röstung solcher Sandwiches sind separate Sandwichtoastgeräte notwendig.

Ein solcher klassischer Sandwichtoaster aus dem Stand der Technik zum Erhitzen von Sandwichtoastbrotscheiben wird in der DE 20 2007 009 228 U1 offenbart. Das Gerät besteht aus einem Ober- und Unterteil, wobei beide Teile über ein Gelenk miteinander verbunden sind. Das Ober- und Unterteil weist jeweils eine Formplatte auf, in welche die belegten Sandwichbrote eingelegt werden. Die Formplatten sind derart gestaltet, dass bei Nutzung des Gerätes mindestens ein, zumeist zwei oder auch mehr Sandwichtoasts entstehen. Bedingt durch die Form der Platten am äußeren Rand werden die Ränder der Sandwichtoasts fest zusammengepresst. In der Regel findet bei den quadratischen Sandwichtoastbroten auch entlang der Diagonale ebenfalls eine Pressung statt. Sind die Sandwichtoasts bereits diagonal vorgeschnitten, werden diese zum Rösten in die Dreiecksfelder der Formplatten eingelegt. Damit soll verdeutlicht werden, dass zur Herstellung von Sandwichtoasts eigene Geräte benötigt werden.

### Aufgabenstellung

Der vorliegenden Anmeldung liegt daher die Aufgabe zugrunde, die bestehenden Nachteile des zuvor genannten Standes der Technik zu vermeiden und ein für die Zubereitung in einem herkömmlichen Toastgerät geeignetes Toastbrot mit Belag zur Verfügung zu stellen. Bei der Aufgabe handelt es sich im Grunde um zwei verschiedene Lebensmittel, die gleichzeitig und zusammen in einem Brotröster getoastet werden sollen, was mit Sandwiches, die aus zwei oder mehr solcher dünnen, übereinander gelegten Brotscheiben bestehen, nicht möglich ist.

### Lösung

Die Lösung der Aufgabe besteht darin, zwei Lebensmittel, unter Ausschluss der vorgenannten Nachteile, derart zu kombinieren und miteinander in Kontakt zu bringen dass das eine Lebensmittel als essbare Verpackung bzw. als Hülle genutzt werden kann, während das andere Lebensmittel aus bekannten Belägen besteht. Die Verpackung wird aus einer Brotscheibe des Typs "Toastbrot" mit den bekannten Abmessungen und Mehlsorten gebildet und der Belag kann aus einem beliebigen Belag bestehen, wie z.B. von Sandwiches bekannt. Vorzugsweise besteht der Belag aus kleingeschnittenen Lebensmitteln, wie z.B. bei der Herstellung von allgemein bekanntem "Bruchetta". Es gilt also ein Lebensmittel der eingangs genannten Art zu schaffen, das besonders einfach und kostengünstig in industrieller Fertigung herstellbar ist und das zur Röstung in herkömmliche Brotröster bzw. Toastgeräte integriert werden kann. Des Weiteren soll dieses Lebensmittel den einzigartigen Geschmack und die Eigenschaften eines klassischen Sandwiches weitgehend aufweisen.

Diese Aufgaben werden erfindungsgemäß mittels eines Lebensmittels mit den Merkmalen des Anspruchs 1 gelöst. Vorteilhafte Ausgestaltungen ergeben sich aus den zugehörigen Unteransprüchen.

### Beschreibung

Das erfindungsgemäße Lebensmittel zur Zubereitung in einem herkömmlichen Brotröster ist gekennzeichnet durch eine Brotscheibe, die an einer schmalen Außenseite einen Schlitz aufweist, welcher den Zugang zu einem Hohlraum bildet, wobei der Hohlraum von anderen schmalen Außenseiten, der Vorderseite und der Rückseite der Brotscheibe umschlossen ist.

Unter herkömmlichen Brotröstern werden in diesem Kontext allgemein im Handel erhältliche Toastgeräte, wie beispielsweise die sogenannten "Pop-Up-Toaster" verstanden, welche die weichen Brotscheiben bzw. Rohtoastscheiben in der Röstkammer toasten.

Der erfinderische Fortschritt lässt sich gegenüber dem Stand der Technik wie folgt verdeutlichen.

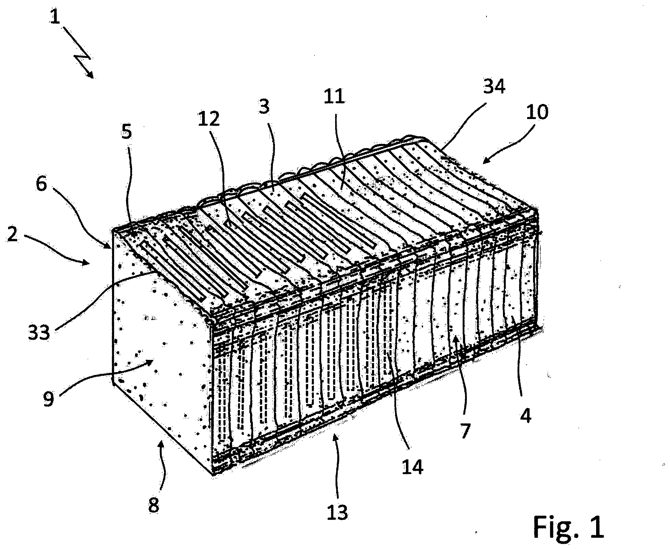

Zunächst werden die industriell oder manuell hergestellten, gefrierfähigen, wieder auftaubaren und erhitzbaren Toastbrote bzw. Toastbrotscheiben, die im Wesentlichen ein rechteckiges oder quadratisches Scheibenformat mit einer mittleren Dicke im Bereich von 8 mm bis 22 mm aufweisen, im technischen Herstellungsprozess der Kastenbrote weiter bearbeitet. Die vorteilhafte Bearbeitung der Toastbrotscheiben nach dem Backen besteht darin, dass an einer ihrer schmalen Außenseiten vollautomatisch durch eine Schneidvorrichtung ein Schlitz eingebracht wird, siehe Figur 1. Bei diesem industriellen Herstellungsprozess liegen die Toastbrotscheiben aneinandergereiht, von wo aus sie dann in die Verpackung gelangen. Vor dem Verpacken der aneinandergereihten Toastbrotscheiben erhalten diese ihren Schlitz. Der Schlitz ist derart ausgeführt, dass dieser mittig auf einer schmalen Außenseite der Toastbrotscheibe angeordnet ist und sich zwischen den beiden, um 90 Grad angrenzenden Außenseiten erstreckt. Des Weiteren verläuft der Schlitz parallel zu den beiden Kanten der Vorder- und Rückseite der Toastbrotscheibe. Unter der Bezeichnung Schlitz wird hier erfindungsgemäß eine längliche und schmale Öffnung verstanden. Aus technischer Sicht kann der Schlitz auch an den anderen schmalen Außenseiten eingebracht werden uzw. an den beiden parallel zueinander beabstandeten und senkrecht zur Oberfläche eines Kastenbrotes verlaufenden Außenseiten. Zum Schlitzen wird ein spezielles Schlitzwerkzeug für die in einer Reihe angeordneten Toastbrotscheiben benutzt, um ein Auseinanderbrechen einer ungerösteten Toastbrotscheibe (Rohtoast) zu vermeiden. Natürlich kann der Schlitz auch an der schmalen Unterseite einer Toastbrotscheibe eingebracht werden.

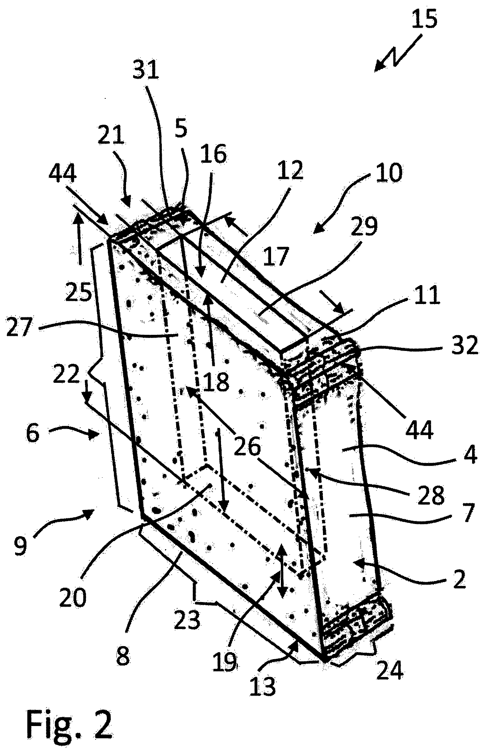

In einer konkreten und bevorzugten Ausführungsform der Erfindung wird vorteilhafterweise zum Schlitzen die obere horizontal verlaufende schmale Außenseite einer ungerösteten Toastbrotscheibe, gemäß Figur 2, benutzt. Hierbei dringt das Schlitzwerkzeug vertikal in eine Toastbrotscheibe ein, wodurch ein Hohlraum entsteht, der anfangs nur durch den Schlitz gebildet wird. Unter der Bezeichnung Hohlraum wird hier erfindungsgemäß ein leerer, umschlossener und hohler Raum im Inneren einer ungerösteten Toastbrotscheibe verstanden. Der Hohlraum befindet sich innerhalb der porösen Substanz einer Toastbrotscheibe nach dem Backvorgang. Die Größe und die Form des Hohlraumes können unterschiedlich ausgebildet sein. Die Größe des Hohlraumes ist abhängig vom Schneidwerkzeug und dessen Einstellung, z.B. der Schnitttiefe, die abhängig ist vom Hub des Schneidwerkzeuges, der auch oszillierend ausgeführt sein kann. Die Form des Hohlraumes hingegen kann von der Form des Schneidwerkzeuges beeinflusst werden, z.B. durch den Schneidradius am Schneidwerkzeug, wodurch Radien in den Ecken des unteren Randes zu den Seitenrändern des Hohlraumes erzeugt werden können. Die Radien haben den Vorteil, das beim Öffnen einer Toastbrotscheibe (Toasttasche) ein einreißen der weichen Konsistenz einer ungerösteten Toastbrotscheibe vermieden wird. Der durch das Schlitzen entstandene Hohlraum wird durch den Abstand seiner inneren seitlichen Ränder und seinem unteren Rand im Hohlraum gebildet, wodurch geschlossene Ränder entstehen, die zu den Außenseiten einer Toastbrotscheibe beabstandet sind. D.h., aufgrund des Abstandes der Ränder des Hohlraumes zu den Außenkanten der Toastbrotscheibe ergibt sich, dass die Fläche des Hohlraumes kleiner als die Fläche einer Toastbrotscheibe ist. Die Größe eines durch das Schlitzen gebildeten Hohlraums in einer Toasttasche ist auch abhängig von den Außenabmessungen einer Brotscheibe abzüglich einer minimalen Wandstärke zum Hohlraum.

Bei diesem erfinderischen Lebensmittelprodukt, welches als Toasttasche bezeichnet wird, wird ein inneres Lebensmittel, bestehend aus einer Füllung (beispielsweise verschiedener Sorten von Pasten, Schokoladenkrems usw.) von einem äußeren Lebensmittel, vorzugsweise Toastbrotscheiben, ummantelt. Damit das äußere Lebensmittel das innere Lebensmittel ummanteln kann, weist das äußere Lebensmittel einen Hohlraum auf, der, wie zuvor beschrieben, zur Aufnahme von inneren Lebensmitteln dient, wobei dieser Hohlraum durch eine offene Oberseite bzw. einen Schlitz in einer Außenseite, einen geschlossenen Boden und zwei geschlossene Seitenränder definiert wird. Dieser Hohlraum kann, wie zuvor aufgezeigt, mit unterschiedlichen Lebensmitteln gefüllt werden. Zum Befüllen einer Toasttasche kann auch eine Füllvorrichtung bzw. ein Einfüllstutzen benutzt werden, vorzugsweise für cremige Substanzen oder Eimassen und/oder Füllzutaten, um nur einige zu nennen. Die einzufüllenden Massen können vorgegart sein.

In einem weiteren Herstellverfahren von Toasttaschen ist vorgesehen, die meist industriell vorgeschnittenen Toastbrotscheiben manuell vor dem Rösten zu schlitzen. Das Schlitzen von Toastbrotscheiben im Hausgebrauch oder in Fast-Food-Ketten, im Gaststättengewerbe usw. kann mit einem Messer von Hand oder mit einem speziellen Schneidegerät erfolgen. Der so erzeugte Hohlraum in einer Toastbrotscheibe kann wiederum mit einer Füllung versehen werden.

Aus dem Stand der Technik ist bekannt, dass das Toastbrot eine einzigartige Textur aufweist, die es von anderen Brotsorten unterscheidet. Es ist weicher und fluffiger als traditionelles Brot, wodurch es ideal zum Toasten geeignet ist. Der Toastvorgang ändert die Struktur der Toastbrotscheibe, indem er ihm eine knusprige Kruste und eine zarte, leicht gebräunte Farbe verleiht. Die Innenstruktur des Toastbrotes bleibt jedoch weich und saftig. Es ist Aufgabe der Erfindung, diese Eigenschaften bei dem Erfindungsgegenstand beizubehalten. Toastbrot ist äußerst vielseitig. Es dient nicht nur für ein einfaches Frühstück mit Butter und Marmelade, sondern kann auch für zahlreiche andere Toastgerichte verwendet werden.

Mit der vorliegenden Erfindung wird die Bandbreite der Toastgerichte um ein wesentliches Gericht erweitert. Hauptbestandteil des Gerichtes bleibt die ungeröstete Toastbrotscheibe, die erfindungsgemäß als Toasttasche bezeichnet wird und die, mit einer Füllung versehen, das neue Toastgericht ergibt. Diese erfinderisch gefüllten Toasttaschen können als Snack für zwischendurch oder als schnelle Mahlzeit den Markt erobern. Eine gefüllte Toasttasche ähnelt im Aussehen einer übergroßen Maultasche. Aufgrund der inneren Füllung wird die Vorder- und Rückseite der Toastbrotscheibe nach außen gewölbt und bildet einen sogenannten Bauch. Vorteilhafterweise wird eine mit einer Füllung versehene Toasttasche in einem Brotröster getoastet. Bevorzugt kommen Brotröster mit einer Bauform infrage, mit der eine Beschickung des unbehandelten Toastbrotes von oben und der Auswurf des gebräunten Toastbrotes an derselben Stelle erfolgen können. Diese Bauform von Brotröstern hat sich im Markt etabliert und soll hier den Erfindungsgegenstand die Toasttasche rösten.

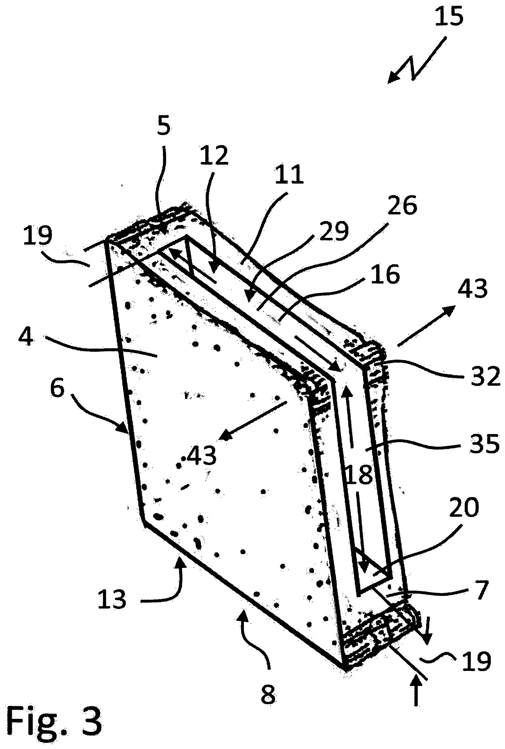

Daher sieht eine weitere Ausführungsform der Erfindung eine ungeröstete bzw. unbehandelte Toastbrotscheibe mit Hohlraum vor, die eine offene Oberseite, einen offenen Seitenrand, einen geschlossenen Seitenrand sowie einen geschlossenen Boden aufweist, siehe Figur 3. Im Grunde handelt es sich um einen Hohlraum, der an zwei Seiten in der Toastbrotscheibe geöffnet ist. Der Vorteil besteht darin, dass gröbere Füllmittel als inneres Lebensmittel verwendet werden können. Trotzdem ist diese Toasttasche zum Rösten in den bekannten Brotröstern geeignet.

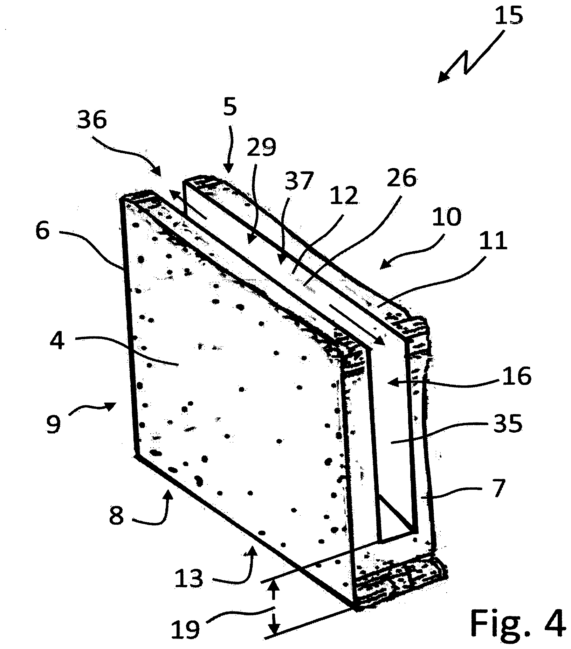

Eine weitere Ausführungsform der Erfindung sieht eine ungeröstete bzw. unbehandelte Toastbrotscheibe mit einem Hohlraum vor, die durch eine offene Oberseite und zwei offene Seitenränder sowie einen geschlossenen Boden gebildet wird, Figur 4. Im Grunde handelt es sich nicht mehr um einen Hohlraum, weil nur noch der Boden geschlossen ist, sondern um zwei aufeinander zu und voneinander weg bewegliche Hälften einer Toastbrotscheibe, die im Bodenbereich miteinander verbunden sind.

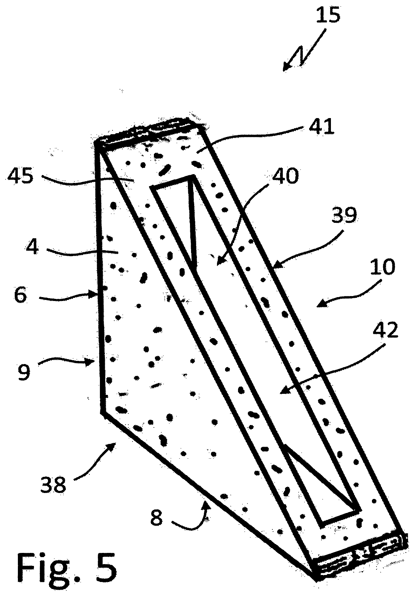

Eine letzte Ausführungsform der Erfindung sieht eine ungeröstete bzw. unbehandelte Toastbrotscheibe mit einem Hohlraum vor, bei der die Toastbrotscheibe nicht quadratisch oder rechteckig, sondern dreieckig ist. Diese dreieckige Toastbrotscheibe entsteht, wenn eine herkömmliche quadratische oder rechteckige Toastbrotscheibe diagonal geschnitten wird. Der Hohlraum weist eine offene Oberseite und zwei geschlossene Seitenränder auf, die im Grunde den geschlossenen Boden bilden, siehe Figur 5. Im Grunde handelt es sich um einen Hohlraum, der an zwei Seiten geschlossen ist, aber eine größere Öffnung in der Diagonalen der Toasttasche bildet.

Die mit einer geschlitzten und mit einem Hohlraum versehener ungerösteter Brotscheibe gebildete Toasttasche kann mit einer Vielzahl verschiedener Lebensmittel gefüllt werden. Nach dem Befüllen der Tasche kann die Füllöffnung auf unterschiedliche Weise verschlossen werden. Das Verschließen kann durch einfaches Drücken auf den Schlitz bzw. die Füllöffnung erfolgen. Ein zweites Verfahren sieht vor, die Füllöffnung mit Druck und Hitze zu versiegeln. In einem weiteren Verfahren wird die Füllöffnung mit einer Creme oder Paste verschlossen. Die Aufzählung der vorgenannten Verfahren soll keine Einschränkung auf weitere Verfahren bedeuten.

### Zeichnungen

Ein Ausführungsbeispiel der Erfindung ist in den Zeichnungen rein schematisch dargestellt und wird nachfolgend näher beschrieben. Es zeigt
- Figur 1: in einer perspektivischen Ansicht ein ungeröstetes Toastbrot mit einer Vielzahl von aneinandergereihten Toastbrotscheiben mit erfinderischem Schlitz, und
- Figur 2: in perspektivischer Ansicht eine ungeröstete Toastbrotscheibe, wobei die Toastbrotscheibe erfindungsgemäß einen Schlitz und einen Hohlraum aufweist, und
- Figur 3: in perspektivischer Ansicht eine ungeröstete Toastbrotscheibe, wobei die Toastbrotscheibe erfindungsgemäß zwei Schlitze und einen Hohlraum aufweist, und
- Figur 4: in perspektivischer Ansicht eine ungeröstete Toastbrotscheibe, wobei die Toastbrotscheibe erfindungsgemäß drei Schlitze aufweist, die einen Spalt als Hohlraum bilden, und
- Figur 5: in perspektivischer Ansicht eine ungeröstete Toastbrotscheibe, wobei die Toastbrotscheibe erfindungsgemäß eine dreieckige Form aufweist, die einen Schlitz auf der schmalen Diagonalseite enthält.

Unter Bezugnahme auf Fig. 1 bis Fig.5 wird im Folgenden eine erfindungsgemäße Toasttasche **15** beschrieben, die in einer Reihe angeordnet und so aufeinander ausgerichtet sind, dass sie sich gegenseitig schützen. Die Toastbrotscheiben **4** sind im Wesentlichen quadratisch und werden unter Anwendung herkömmlicher Techniken aus einem Kastenbrot gewonnen, das auf geeignete Weise behandelt und anschließend getoastet werden kann.

Das in der **Fig.1** in perspektivischer Darstellung aufgezeigte Lebensmittel **1** ist ein Kastenbrot, vorzugsweise in der Ausführungsform eines Toastbrotes **2.** Das ungeröstete Toastbrot **2** besteht aus einer Vielzahl von aneinandergereihten geschnittenen Scheiben **3** die einzelne Brotscheiben **4** bilden. Eine Brotscheibe **4** wird durch vier schmalen Außenseiten **5, 6, 7, 8** einer Vorder- **9** und einer Rückseite **10** gebildet. In der obersten schmalen Außenseite **5,** welche die Oberseite **11** des Toastbrotes bildet, befindet sich ein Schlitz **12.** Die Brotscheiben **4** der einen Hälfte des Kastenbrotes sind mit einem Schlitz **12** ausgestattet, während die andere Hälfte noch ohne Schlitz **12** ist. Ein solcher Schlitz **12** verläuft mittig auf der schmalen, in etwa horizontal verlaufenden Oberseite **11** und zwischen den zwei seitlich angrenzenden schmalen Außenseiten **6, 7,** wobei die beiden schmalen Außenseiten **6, 7** in etwa um 90 Grad geneigt, vertikal zur Oberseite **11** verlaufen. Des Weiteren verläuft der Schlitz **12** parallel zu den beiden Kanten **33, 34,** die durch die Vorder-**9** und Rückseite **10** und der Oberseite **11** der Toastbrotscheibe **4** gebildet werden.

Die an die beiden seitlichen schmalen Außenseiten **6, 7** angrenzende untere Außenseite **8** bildet den Bodenbereich **13.** Die schmale Außenseite **8** des Bodenbereichs **13** verläuft parallel zur schmalen Außenseite **5** der Oberseite **11,** wodurch sich eine in etwa quadratische Form der Brotscheibe **4** ergibt. In einer weiteren Ausführungsform des ungerösteten Toastbrotes **2** kann sich der Schlitz 1 **12** auch an einer der beiden anderen schmalen seitlichen Außenseiten **6, 7** befinden. Der Schlitz **14** ist hier in der rechten schmalen Außenseite **7** gestrichelt dargestellt. Die Ausführungsform mit dem Schlitz in der schmalen unteren Außenseite **8** des Bodenbereichs **13** ist nicht dargestellt.

Die **Fig.2** zeigt in perspektivischer Darstellung eine erste erfindungsgemäße Toasttasche **15.** Die Toasttasche **15** wird aus einer geschnittenen Brotscheibe **4,** aus einem Schlitz **12** und einem Hohlraum **16** gebildet. Der mittig in einer schmalen Außenseite **5,** vorzugsweise an der Oberseite **11,** angeordnete Schlitz **12** weist eine Länge **17** von 1 cm bis 8 cm bzw. von 1 cm bis 10 cm auf, vorzugsweise von 2 cm bis 7 cm. Die Breite **21** des Schlitzes **12** beträgt 0,5 mm bis 6 mm, vorzugsweise 1 mm bis 4 mm. Zur Bestimmung der Größe des Hohlraums **16** wird noch die Schlitztiefe **18** in der Brotscheibe **4** benötigt. Die maximale Schlitztiefe **18** wiederum ist abhängig von der Größe der Brotscheibe **4.** Die äußeren Abmessungen einer Toastbrotscheibe **4** betragen im Normalfall in der Höhe **22** x Breite **23** x Dicke **24** in cm, gemäß erstem Beispiel in etwa 9 cm x 9,5 cm x 1,3 cm oder gemäß zweitem Beispiel in etwa 11 cm x 11 cm x 1,2 cm. Zwischen der Schlitztiefe **18,** die den unteren Rand **20** des Hohlraumes **16** bildet und der Höhe **22** einer Brotscheibe **4** bleibt eine Wandstärke **19.** Die Wandstärke **19** sollte vorteilhafterweise nicht weniger als 1 cm betragen. Dadurch ergibt sich gemäß erstem Beispiel eine Hohlraumtiefe **25** von etwa 8 cm, gemessen von der schmalen Oberseite **11** in Richtung Bodenbereich **13** und gemäß zweitem Beispiel von etwa 10 cm. Zur Bestimmung der maximalen Größe eines Hohlraums **16** ist auch noch die Hohlraumbreite **26** zu ermitteln. Zwischen der Hohlraumbreite **26,** welche durch die beiden seitlichen Ränder **27, 28** des Hohlraumes **16** gebildet werden und der Breite **23** einer Brotscheibe **4** darf die Wandstärke **19** jeweils zu den beiden schmalen seitlichen Außenseiten **6, 7,** vorteilhafterweise nicht weniger als 1 cm betragen. Dadurch ergibt sich eine maximale Hohlraumbreite **26** gemäß erstem Beispiel von etwa 7,5 cm und gemäß zweitem Beispiel von etwa 9 cm bei einer minimalen Wandstärke **19.** Der Hohlraum **16** wird also von den vier Außenseiten **5, 6, 7, 8,** der oberen Außenseite **5,** den beiden seitlichen Außenseiten **6, 7** und der unteren Außenseite **8** sowie der Vorder-**9** und Rückseite **10** umschlossen. Die beiden seitlichen vertikalen Außenseiten **6, 7** und die untere horizontale Außenseite **8** des Bodenbereichs **13** sind durch eine Wandstärke **19** vom Hohlraum **16** beabstandet. Die Stärke der Wand sollte eine minimal vorgegebene Wandstärke **19** nicht unterschreiten. Zur oberen Außenseite **5** schließt der Hohlraum **16** unmittelbar an. Der Hohlraum **16** weist in der Oberseite **11** eine Füllöffnung **29** auf, die durch den Schlitz **12** bzw. der Schlitzgröße (bestehend aus der Schlitzlänge **17** x Schlitzbreite **21**) gebildet wird. Das Volumen einer ungerösteten Brotscheibe **4** beträgt, unter Berücksichtigung der zuvor angegebenen Abmessungen gemäß erstem Beispiel, annähernd 111 cm³ und gemäß zweitem Beispiel ungefähr 145 cm³. Nach Abzug der Wandstärken **19** und unter Berücksichtigung der Schlitzbreite **21** ergibt sich für den Hohlraum **16** annähernd ein maximales Volumen von ca. 24 cm³ im ungeöffneten Zustand einer ungerösteten Brotscheibe **4.** Das Volumen des Hohlraumes **16** kann um ein Vielfaches vergrößert werden, wenn beim Einfüllen eines Füllgutes (nicht dargestellt) die Füllöffnung **29** vergrößert wird. Die Vergrößerung einer Füllöffnung **29** erfolgt beim Ergreifen einer Toasttasche **15** z.B. mit der linken oder rechten Hand, indem die Toasttasche **15** zwischen dem Daumen und den Fingern eingeklemmt wird. Der Daumen und der Zeigefinger üben einen Druck auf die oberen, sich gegenüber liegenden Ecken 1 **31** und 2 **32** aus, die sich jeweils am Ende eines Schlitzes **12** bzw. am Ende der schmalen Außenseite **5** einer Oberseite **11** befinden. Die Ecke 1 **31** wird an der Stelle gebildet, wo sich die seitliche schmale Außenseite **6** und die schmale obere Außenseite **5** (Oberseite **11**) treffen, während die Ecke 2 **32** durch die seitliche schmale Außenseite **7** und der Oberseite **11** gebildet wird. Aufgrund der weichen Konsistenz eines frischen ungerösteten Toastbrotes **2** und dem ausgeübten Druck auf die Ecke 1 **31** und die Ecke 2 **32** der Brotscheibe **4** in Druckrichtung 44, öffnet sich der Schlitz **12** und gibt aufgrund des Ziehharmonika-Effekts nach außen nach. Die Länge des Schlitzes **12** verkürzt sich und die Schlitzbreite **21** nimmt gravierend zu, wodurch der Hohlraum **16** wesentlich vergrößert wird. Das Volumen des Hohlraums **16** steigt um bis zu 200 %. Es entsteht eine geöffnete Toasttasche **15** bzw. ein "TOAST BAG". Die Form der so entstandenen Füllöffnung **29** entspricht annähernd einer Raute, wobei die Füllöffnung **29** am größten ist, wenn die Winkel in der Raute alle gleich sind. Eine Raute ist ein Viereck mit vier gleich langen Seiten. Die gegenüberliegenden Seiten sind parallel und die gegenüberliegenden Winkel sind gleich. In dieser Konstellation ist die Fläche der Füllöffnung **29** am größten. In der nächsten **Figur 3** ist eine zweite Ausführungsform einer Toasttasche **15** ersichtlich.

Die **Fig.3** zeigt in perspektivischer Ansicht eine ungeröstete Toastbrotscheibe **4.** Die in der **Figur 1** und **Figur 2** aufgezeigten Bezugszeichen werden hier analog übernommen. Auch eine teilweise Beschreibung der Toastbrotscheibe **4** aus der **Figur 1** und **2** werden hier übernommen und für die nachstehenden Figuren benutzt. Die Toasttasche **15** ist erfindungsgemäß mit zwei Schlitzen, einem ersten Schlitz 1 **12** und einem zweiten Schlitz 2 **35,** sowie einem Hohlraum **16,** ausgestattet. Der erste Schlitz **12** ist in der schmalen Außenseite **5** und der zweite Schlitz **35** ist in der schmalen Außenseiten **7** derart ausgeordnet, dass die beiden Schlitze 1 **12** und 2 **35** sich in der Ecke 2 **32** treffen, wobei die beiden Außenseiten **5, 7** rechtwinklig zueinander stehen. Aufgrund der beiden Schlitze 1 **12** und 2 **35** ändert sich die Füllöffnung **29.** Die Füllöffnung **29** erstreckt sich jetzt über die schmale Außenseite **7** und die rechtwinklig dazu verlaufende Oberseite **11.** Aufgrund einer größeren Füllöffnung **29** kann auch ein in den Abmessungen gröberes Lebensmittel als Füllgut verwendet werden. Der Hohlraum **16** wird hier nur noch von zwei Außenseiten **6, 8,** der schmalen seitlichen Außenseite **6** und der schmalen unteren Außenseite **8** des Bodenbereichs **13** umschlossen. Der Hohlraum **16** grenzt sich, wie in der Figur 2 beschrieben, durch seine Wandstärke **19** zum Außenmaß der schmalen Außenseite **6** und der Außenseite **8** einer Toastbrotscheibe **4** ab. D.h., die max. Schlitztiefe **18** entspricht dem unteren Rand **20** des Hohlraumes **16,** während sich die Hohlraumbreite **26,** aufgrund des Wegfalls der Wandstärke zum Außenmaß der schmalen seitlichen Außenseite **7,** vergrößert. Die Hohlraumbreite **26** entspricht jetzt der Breite **23** einer Toastbrotscheibe **4.** Das Volumen des Hohlraums **16** der erfinderischen Toasttasche **15** kann durch ein Auseinanderbiegen der Ecke **2 32** in vertikaler Richtung **43** zur Vorder- **9** und Rückseite **10,** wesentlich vergrößert werden. In der nächsten **Figur 4** ist eine weitere Ausführungsform einer Toasttasche **15** ersichtlich.

Gemäß der **Fig.4** wird eine Toasttasche **15** aufgezeigt, deren Basis eine Toastbrotscheibe **4** ist, welche mit drei Schlitzen ausgebildet ist. Der erste Schlitz **12** befindet sich in der Oberseite **11,** während der zweite Schlitz **35** in der rechten schmalen Außenseite **7** und der dritte Schlitz **36** in der linken schmalen Außenseite **6** angeordnet ist. Der jeweils in einer schmalen Außenseite **5, 6, 7** angeordnete Schlitz **12, 35, 36** bildet zusammen eine Spalte **37,** wobei die drei Außenseiten **5, 6, 7** jeweils rechtwinklig zueinander stehen. Aufgrund der Anordnung der drei Schlitze **12, 35, 36** ergibt sich ein Hohlraum **16,** der nur noch durch die Wandstärke **19** zum Bodenbereich **13** abgrenzt ist. Im Grunde wurde eine durchgehende Spalte **37** in der Toastbrotscheibe **4** erzeugt, die von der Vorderseite **9** und der Rückseite **10** und der schmalen Außenseite **8** gebildet wird. Bei dieser Art der Toasttasche **15** kann längliches Füllgut als inneres Lebensmittel verwendet werden, weil die Füllöffnung **29** sich über drei offene Seiten der Toasttasche **15** erstreckt. In der nächsten **Figur 5** ist eine weitere Ausführungsform einer Toasttasche **15** ersichtlich.

Gemäß der **Fig.5** wird eine Toastbrotscheibe **4** dargestellt, die keine quadratische Form aufweist, sondern eine dreieckige Form **38.** Diese dreieckige Form **38** entsteht dadurch, dass eine Toastbrotscheibe **4** entlang ihrer Diagonalen **39** geschnitten wird. Jetzt gibt es zwei Möglichkeiten aus einer solchen Toastbrotscheibe **4** eine Toasttasche **15** zu bilden. Grundsätzlich wird eine Toasttasche **15** dadurch gebildet, dass an einer ihren schmalen Außenseiten **5, 6, 7, 8** ein Schlitz **12** eingebracht wird, um einen anschließenden Hohlraum **16** zu bilden. Im vorliegenden Fall der **Figur 5** wird der Schlitz **40** auf der Oberseite **45** einer neuen Außenseite **41** eingebracht. Die neue Außenseite **41** entspricht der Diagonalen **39.** An den Schlitz **40** schließt sich der Hohlraum **42** zur Aufnahme des Füllguts an.

### Bezugszeichenliste

| | | | |
|---|---|---|---|
| 1 | Lebensmittel | 25 | Hohlraumtiefe |
| 2. | Toastbastbrot ungeröstet | 26 | Hohlraumbreite |
| 3 | eschnittene Scheiben | 27 | seitlicher Rand (Hohlraum) |
| 4 | Brotscheibe | 28 | seitlicher Rand (Hohlraum) |
| 5 | Außenseite (oben) | 29 | Füllöffnung |
| 6 | Außenseite (seitlich links) | 30 | |
| 7 | Außenseite (seitlich rechts) | 31 | Ecke 1 |
| 8 | Außenseite (unten) | 32 | Ecke 2 |
| 9 | Vorderseite | 33 | Kante (Vorderseite/Oberseite) |
| 10 | Rückseite | 34 | Kante (Rückseite/Oberseite) |
| 11 | Oberseite | 35 | Schlitz 2 |
| 12 | Schlitz 1 | 36 | Schlitz 3 |
| 13 | Bodenbereich | 37 | Spalte |
| 14 | gestrichelter Schlitz | 38 | dreieckige Form |
| 15 | Toasttasche | 39 | Diagonale |
| 16 | Hohlraum | 40 | Schlitz |
| 17 | Länge | 41 | Außenseite |
| 18 | Schlitztiefe | 42 | Hohlraum |
| 19 | Wandstärke | 43 | vertikale Richtung |
| 20 | unterer Rand (Hohlraum) | 44 | Druckrichtung |
| 21 | Schlitzbreite | 45 | Oberseite |
| 22 | Höhe (v.4) | | |
| 23 | Breite (v.4) | | |
| 24 | Dicke (v.4) | | |

## Patentansprüche

1. Lebensmittel (**1**) in Form eines gebackenen Brotes, bestehend aus geschnittenen Scheiben (**3**), welche überwiegend aus Weizenmehl und Zusatzmitteln oder einer Mischung aus verschiedenen Mehlsorten hergestellt werden und welche zum anschließenden Rösten in einem herkömmlichen Brotröster geeignet sind, **dadurch gekennzeichnet, dass** eine Brotscheibe (**4**) an einer schmalen Außenseite (**5**) einen Schlitz (**12**) aufweist, welcher den Zugang zu einem Hohlraum (**16**) bildet, wobei der Hohlraum (**16**) von den anderen schmalen Außenseiten (**6, 7, 8**), der Vorderseite (**9**) und der Rückseite (**10**) der Brotscheibe (**4**), umschlossen ist..

2. Lebensmittel (**1**) nach Anspruch 1, **dadurch gekennzeichnet, dass** der Schlitz (**12**) mittig auf einer schmalen Außenseite (**5**) einer Brotscheibe (**4**) angeordnet ist und sich zwischen den beiden angrenzenden Außenseiten (**6**, **7**) erstreckt und parallel zu der Kante (**33**) der Vorder- (**9**) und zu der Kante (**34**) der Rückseite (**10**) verläuft und eine Füllöffnung (**29**) bildet, wodurch eine Toasttasche (**15**) entsteht.

3. Lebensmittel (**1**) nach Anspruch 2, **dadurch gekennzeichnet, dass** der Schlitz (**12**) eine Schlitzbreite (**21**), eine Schlitzlänge (**17**) und eine Schlitztiefe (**18**) aufweist, welche die Größe eines Hohlraumes (**16**) bilden, der einen leeren, umschlossenen Raum bildet und der im Inneren einer ungerösteten Brotscheibe (**4**) angeordnet ist.

4. Lebensmittel (**1**) nach Anspruch 3, **dadurch gekennzeichnet, dass** die maximale Größe eines Hohlraumes (**16**) durch den minimalen Abstand seiner inneren seitlichen Ränder (**27, 28**) und seines unteren Randes (**20**) zu den Außenseiten (**6, 7, 8**) einer Brotscheibe (**4**) gebildet wird und die Form des Hohlraums (**16**) durch die Form eines Schneidwerkzeuges gebildet wird.

5. Lebensmittel (**1**) nach Anspruch 4, **dadurch gekennzeichnet, dass** die Außenabmessungen einer Brotscheibe (**4**), abzüglich einer minimalen Wandstärke (**19**), die Größe eines Hohlraumes (**16**) in einer Toasttasche (**15**) bestimmen.

6. Lebensmittel (**1**) nach Anspruch 2, **dadurch gekennzeichnet, dass** die Vergrößerung einer Füllöffnung (**29**) durch einen Druck auf die sich gegenüberliegenden Ecken (**31, 32**) einer schmalen Außenseite (**6**) erfolgt, wodurch sich die Schlitzlänge (**17**) verkürzt und die Schlitzbreite (**21**) zunimmt.

7. Lebensmittel (**1**) nach Anspruch 5, **dadurch gekennzeichnet, dass** die Form einer Füllöffnung (**29**) die Form einer Raute bildet.

8. Lebensmittel (**1**) nach Anspruch 2, **dadurch gekennzeichnet, dass** die Toasttasche (**15**) aus einer Toastbrotscheibe (**4**) gebildet ist, die zwei Schlitze (**11, 35**) aufweist, die jeweils in einer schmalen Außenseite (**5, 7**) angeordnet sind, wobei die beiden Außenseiten (**5, 7**) rechtwinklig zueinander stehen und die Füllöffnung (**29**) sich über die schmale Außenseite (**7**) und die rechtwinklig dazu verlaufende Oberseite (**11**) erstreckt.

9. Lebensmittel (**1**) nach Anspruch 8, **dadurch gekennzeichnet, dass** die Toasttasche (**15**) aus einer Toastbrotscheibe (**4**) gebildet ist, die drei Schlitze (**11, 35**) aufweist, die jeweils in einer schmalen Außenseite (**5, 6, 7**) angeordnet sind und zusammen eine Spalte (**37**) ergeben, wobei die drei Außenseiten (**5, 6, 7**) jeweils rechtwinklig zueinander stehen und die Spalte (**37**) eine Füllöffnung (**29**) ergibt.

10. Lebensmittel (**1**) nach Anspruch 6, **dadurch gekennzeichnet, dass** die Toasttasche (**15**) aus einer Toastbrotscheibe (**4**) gebildet ist, die eine dreieckige Form (**38**) aufweist, die entlang der schmalen Außenseite (**41**) der Diagonalen (**39**) einen Schlitz (**40**) enthält, an den sich der Hohlraum (**42**) anschließt.

## Geänderte Patentansprüche

### Geänderte Patentansprüche gemäss Regel 137(2) EPÜ.

1. Kastenweißbrot **(30)** in Form eines gebackenen Brotes, mit im Querschnitt quadratischer Form und leicht abgerundeten oberen Ecken, bestehend aus aneinandergereihten, vorgeschnittenen und ungerösteten Scheiben **(3),** die eine Vorder- **(9)** und eine Rückseite **(10)** und vier Außenseiten **(5, 6, 7, 8)** aufweisen, welche überwiegend aus Weizenmehl und Zusatzmitteln oder einer Mischung aus verschiedenen Mehlsorten manuell oder industriell hergestellt werden und welche zum anschließenden Rösten in einem herkömmlichen Brotröster geeignet sind, **dadurch gekennzeichnet, dass** eine vorgeschnittene Brotscheibe **(4)** an einer schmalen Außenseite **(5)** einen Schlitz **(12)** aufweist, welcher den Zugang zu einem Hohlraum **(16)** bildet, wobei der Hohlraum **(16)** von den anderen schmalen Außenseiten **(6, 7, 8),** der Vorderseite **(9)** und der Rückseite **(10)** der Brotscheibe **(4),** umschlossen ist.

2. Kastenweißbrot **(30)** nach Anspruch 1, **dadurch gekennzeichnet, dass** der Schlitz **(12)** mittig auf einer schmalen Außenseite **(5)** einer Brotscheibe **(4)** angeordnet ist und sich zwischen den beiden angrenzenden Außenseiten **(6, 7)** erstreckt und parallel zu der Kante **(33)** der Vorder- **(9)** und zu der Kante **(34)** der Rückseite **(10)** verläuft und eine Füllöffnung **(29)** bildet, wodurch eine Toasttasche **(15)** entsteht.

3. Kastenweißbrot **(30)** nach Anspruch 2, **dadurch gekennzeichnet, dass** der Schlitz **(12)** eine Schlitzbreite **(21),** eine Schlitzlänge **(17)** und eine Schlitztiefe **(18)** aufweist, welche die Größe eines Hohlraumes **(16)** bilden, der einen leeren, umschlossenen Raum bildet und der im Inneren einer ungerösteten Brotscheibe **(4)** angeordnet ist.

4. Kastenweißbrot **(30)** nach Anspruch 3, **dadurch gekennzeichnet, dass** die maximale Größe eines Hohlraumes **(16)** durch den minimalen Abstand seiner inneren seitlichen Ränder **(27, 28)** und seines unteren Randes **(20)** zu den Außenseiten **(6, 7, 8)** einer Brotscheibe **(4)** gebildet wird und die Form des Hohlraums **(16)** durch die Form eines Schneidwerkzeuges gebildet wird.

5. Kastenweißbrot **(30)** nach Anspruch 4, **dadurch gekennzeichnet, dass** die Außenabmessungen einer Brotscheibe **(4),** abzüglich einer minimalen Wandstärke **(19),** die Größe eines Hohlraumes **(16)** in einer Toasttasche **(15)** bestimmen.

6. Kastenweißbrot **(30)** nach Anspruch 2, **dadurch gekennzeichnet, dass** die Vergrößerung einer Füllöffnung **(29)** durch einen Druck auf die sich gegenüberliegenden Ecken **(31, 32)** einer schmalen Außenseite **(6)** erfolgt, wodurch sich die Schlitzlänge **(17)** verkürzt und die Schlitzbreite **(21)** zunimmt.

7. Kastenweißbrot **(30)** nach Anspruch 5, **dadurch gekennzeichnet, dass** die Form einer Füllöffnung **(29)** die Form einer Raute bildet.

8. Kastenweißbrot **(30)** nach Anspruch 2, **dadurch gekennzeichnet, dass** die Toasttasche **(15)** aus einer Toastbrotscheibe **(4)** gebildet ist, die zwei Schlitze **(11, 35)** aufweist, die jeweils in einer schmalen Außenseite **(5, 7)** angeordnet sind, wobei die beiden Außenseiten **(5, 7)** rechtwinklig zueinander stehen und die Füllöffnung **(29)** sich über die schmale Außenseite **(7)** und die rechtwinklig dazu verlaufende Oberseite **(11)** erstreckt.

9. Kastenweißbrot **(30)** nach Anspruch 8, **dadurch gekennzeichnet, dass** die Toasttasche **(15)** aus einer Toastbrotscheibe **(4)** gebildet ist, die drei Schlitze **(11, 35)** aufweist, die jeweils in einer schmalen Außenseite **(5, 6, 7)** angeordnet sind und zusammen eine Spalte **(37)** ergeben, wobei die drei Außenseiten **(5, 6, 7)** jeweils rechtwinklig zueinander stehen und die Spalte **(37)** eine Füllöffnung **(29)** ergibt.

10. Kastenweißbrot **(30)** nach Anspruch 6, **dadurch gekennzeichnet, dass** die Toasttasche **(15)** aus einer Toastbrotscheibe **(4)** gebildet ist, die eine dreieckige Form **(38)** aufweist, die entlang der schmalen Außenseite **(41)** der Diagonalen **(39)** einen Schlitz **(40)** enthält, an den sich der Hohlraum **(42)** anschließt.
